# EUROPÄISCHE PATENTSCHRIFT

(11) **EP 1 990 486 B1**
(45) Veröffentlichungstag und Bekanntmachung des Hinweises auf die Patenterteilung: **22.07.2009**
(21) Anmeldenummer: 07107690.5
(22) Anmeldetag: 08.05.2007
(51) Int. Cl.: E05B 17/00, B29C 45/16, E05B 65/20

(54) **Verfahren zur Herstellung eines Türaußengriffes**
Method for manufacturing an exterior door handle
Procédé pour la fabrication d'une poignée de porte extérieure

(43) Veröffentlichungstag der Anmeldung: 12.11.2008
(73) Patentinhaber: HUF Hülsbeck & Fürst GmbH & Co. KG, 42551 Velbert (DE)
(72) Erfinder: Gertig, Frank, 51467 Bergisch Gladbach (DE)
(74) Vertreter: Vogel, Andreas

(56) Entgegenhaltungen:
- WO-A-03/050371
- DE-A1- 19 935 290
- DE-A1-1102005 022 79
- DE-A1-9102005 046 11
- FR-A- 2 819 538

## Beschreibung

Die Ereindung betrifft ein Verfahren zur Herstellung eines Türaußengriffes für Kraftfahrzeuge.

Bekannte Türaußengriffe von Kraftfahrzeugen dienen zur mechanischen Verstellung einer Schlossfalle einer Schließvorrichtung. Solche Art Schließvorrichtungen sind in Kraftfahrzeugen eingebaut und dienen zum kraft- und/oder formschlüssigen Verschließen einer Kraftfahrzeugaußentür. Türaußengriffe der beschriebenen Art bestehen im Allgemeinen aus einer Vielzahl von Formenteilen. Im Rahmen von gängigen Produktionsverfahren, wie etwa jenem in der Offenlegungsschrift DE 10 2005 046 119 A1 beschriebenen, wird in diese Formenteile eine Elektronikeinheit integriert, welche Teil der Schließvorrichtung des Kraftfahrzeuges ist. Durch ein Zusammenfügen sowohl der Formenteile als auch der Elektronikeinheit entsteht der äußerlich noch unbehandelte Türaußengriff.

Zur Veredelung der äußeren Gestalt wird die Oberfläche des Türaußengriffes lackiert. Dabei hat es sich als nachteilig erwiesen, dass Lackpartikel mit der schon eingebauten Elektronikeinheit in Kontakt kommen können. So entstehende Kurzschlüsse oder andersartige Beschädigungen können zu einer partiellen oder vollständigen Zerstörung der Elektronikeinheit führen. Um einen gleichmäßigen Qualitätsstandard zu erreichen, ist der Hersteller des Türaußengriffes somit verpflichtet, die Elektronikeinheit im eingebauten Zustand zu prüfen. Eventuelle Beschädigungen können nicht mehr repariert werden, da eine Entnahme der Elektronikeinheit nur sehr aufwendig möglich ist.

Es ist Aufgabe der vorliegenden Erfindung, ein Verfahren zur Herstellung eines Türaußengriffes für Kraftfahrzeuge zu offenbaren, bei dem die genannten Nachteile vermieden werden, insbesondere keine Beschädigung der Elektronikeinheit beim Lackieren auftritt.

Zur Lösung dieser Aufgabe wird ein Verfahren zur Herstellung eines Türaußengriffes für Kraftfahrzeuge mit den Merkmalen des Anspruches 1 vorgeschlagen. In den abhängigen Ansprüchen sind bevorzugte Weiterbildungen ausgeführt.

Erfindungsgemäß wird die Aufgabe gelöst, durch ein Verfahren zur Herstellung eines Türaußengriffes für Kraftfahrzeuge, wobei das Verfahren die folgenden Schritte aufweist:
(a) Spritzgießen wenigstens eines ersten und eines zweiten Formenteiles mittels einer Kunststoffmasse;
(b) Erstellen des Türaußengriffes aus den wenigstens zwei Formenteilen;
(c) Lackieren einer Oberfläche des Türaußengriffes;
(d) Zerlegen des Türaußengriffes in die wenigstens zwei Formenteile;
(e) Einbauen einer Elektronikeinheit in mindestens eines der beiden Formenteile;
(f) Zusammenfügen der wenigstens zwei Formenteile und der Elektronikeinheit zu dem Türaußengriff.

Im Rahmen des erfindungsgemäßen Verfahrens ist es somit vorgesehen, zuerst die Formenteile aus einer Kunststoffmasse herzustellen. Aus den so erstellten Formenteilen lässt sich der Türaußengriff erstellen, welcher allerdings noch keine veredelte Oberfläche aufweist. Dieses erfolgt im nächsten Verfahrensschritt, bei dem die Oberfläche des Türaußengriffes lackiert wird. Unter dem Begriff Oberfläche ist dabei vorrangig jener Teil des Türaußengriffes zu verstehen, den ein Benutzer sieht und/oder möglicherweise berührt. Somit umfasst die Oberfläche im Sinne der Erfindung nicht unbedingt die vollständige Außenfläche des Türaußengriffes. Im Anschluss an das Lackieren wird der Türaußengriff wieder in die Formenteile zerlegt. Erst daran anschließend wird die Elektronikeinheit in eines oder mehrere der Formenteile integriert. Das Einbauen der Elektronikeinheit nach der Lackierung des Türaußengriffes verhindert, dass Lackpartikel mit der Elektronikeinheit in Kontakt kommen. Vielmehr ist zum Zeitpunkt des Einbaues sichergestellt, dass der Lack auf der Oberfläche des Türaußengriffes getrocknet und gehärtet ist. Im Anschluss an die Integration der Elektronikeinheit in mindestens eines der Formenteile erfolgt ein Zusammenfügen des Türaußengriffes. Im Rahmen des erfindungsgemäßen Verfahrens ist es möglich, die Elektronikeinheit bei der Herstellung auf eventuelle Fehler zu prüfen. Eine nochmalige Überprüfung nach der Integration in den Türaußengriff wie es bisher vonnöten war, wird durch das erfindungsgemäße Verfahren überflüssig. Darüber hinaus wird durch das erfindungsgemäße Verfahren eine deutliche Reduktion der Herstellungszeit des Türaußengriffes erreicht. Die separate Lackierung der Oberfläche des gesamten Türaußengriffes und der anschließende Einbau der Elektronikeinheit führen zu einer wesentlichen Verkürzung der Durchlaufzeit bei der Produktion von Türaußengriffen für Kraftfahrzeuge.

Eine vorteilhafte Ausgestaltung des erfindungsgemäßen Verfahrens zur Herstellung eines Türaußengriffes zeichnet sich dadurch aus, dass der Schritt (a) mindestens die folgenden Schritte aufweist:
(i) Einbringen einer Menge der geschmolzenen Kunststoffmasse in eine erste und eine zweite Formenkavität, um die erste und zweite Formenkavität im Wesentlichen zu füllen;
(ii) Einbringen von unter Druck stehendem Gas oder von einer unter Druck stehenden Flüssigkeit in die Kunststoffmasse in der ersten und zweiten Formenkavität;
(iii) Zulassen, dass die Kunststoffmasse im der ersten und zweiten Formenkavität erstarrt;
(iv) Ausstoßen des Gases oder der Flüssigkeit aus den Formenkavitäten;
(v) Entfernen des ersten und des zweiten Formenteiles aus den Formenkavitäten.

Im Rahmen des Schrittes (i) wird eine Kunststoffmasse - etwa ein Kunstharzmaterial - im geschmolzenen Zustand mit Hilfe einer Spritzgießmaschine in die Formenkavitäten injiziert. Im Anschluss daran wird der Kunststoff in den Formenkavitäten mit Hilfe der Spritzgießmaschine über eine kurze vorgegebene Zeitdauer druckbeaufschlagt, beispielsweise für 1 bis 30 Sekunden. Dieses unterstützt eine gute Reproduzierbarkeit der Oberflächen der so produzierten Formenteile. Das in die Formenkavität eingedrückte Gas bzw. die eingedrückte Flüssigkeit sorgt dafür, dass ein Hohlraum in der geschmolzenen Kunststoffmasse entsteht und diese gegen die Innenflächen der Formenkavitäten gedrückt wird. Durch das Aufrechterhalten des Innendruckes erstarrt die Kunststoffmasse an einer Außenschicht, während ein Kernabschnitt der Kunststoffmasse geschmolzen bleibt. Dieses resultiert in einer guten Oberflächengüte der so produzierten Formenteile. Im Anschluss daran wird das Druckmedium über ein Ventil von der Spritzgießmaschine aus der Formenkavität partiell entlassen. Der verbleibende "Halte-" oder "Verdichtungsdruck" des Gases / der Flüssigkeit in der Formenkavität bleibt bestehen, während die verbleibende Kunststoffmasse abkühlt und erstarrt. Der Zeitaufwand hierfür liegt in der Größenordnung von 10 bis 50 Sekunden oder länger, je nach Größe oder Dicke des gegossenen Formenteiles. Nach der Entlüftung oder dem Ausstoß des Gases aus der Formenkavität wird diese geöffnet und das fertige Formenteil ausgeworfen oder entfernt. Etwaige überstehende Kunststoffreste können entfernt, zerkleinert und wieder verwendet werden. Durch den beschriebenen Ablauf des Schrittes (a) des erfindungsgemäßen Verfahrens ist eine gleichmäßige Qualität bei der Produktion der Formenteile und somit des Türaußengriffes gesichert.

Eine weitere vorteilhafte Ausgestaltung des erfindungsgemäßen Verfahrens zeichnet sich dadurch aus, dass der Schritt (a) derart ausgestaltet ist, dass ein flüssiges Farbelement in die Kunststoffmasse eingebracht wird, wobei die Kunststoffmasse und das flüssige Farbelement derart vermischt werden, dass sich eine homogenisierte Vergussmasse bildet, die in die erste und/oder die zweite Formenkavität eingespritzt wird, wodurch das gleichmäßig durchgefärbte erste und/oder zweite Formenteile hergestellt werden.

Erfindungsgemäß wird das flüssige Farbelement ausschließlich vor dem Einspritzen in die Formenkavität der Kunststoffmasse, welche durch eine Vielzahl an Kunststoffgranulaten gebildet ist, zugeführt. Dabei werden die plastifizierte Kunststoffmasse und das flüssige Farbelement derart innerhalb der Spritzgießmaschine vermischt, dass sich eine homogenisierte Vergussmasse bildet, die in die Formenkavität eingespritzt wird, wodurch ein gleichmäßig durchgefärbtes Formenteil hergestellt wird. Innerhalb der Spritzgießmaschine wird die Vergussmasse derart vermischt, dass beim Eintritt in die Formenkavität die Vergussmasse einen hohen Grad an Homogenisierung aufweist. Die entstehenden Formenteile weisen ein wohlgefälliges Aussehen auf, wobei etwaige Beschädigungen, wie Kratzer etc. nicht auffallen, da das Formenteil in seinem Querschnitt durchgefärbt ist. Durch die beschriebene vorteilhafte Ausgestaltung des erfindungsgemäßen Schrittes (a) muss im Rahmen des Schrittes (c) der Türaußengriff nur noch mit einem Klarlack lackiert werden. Durch das Einbringen des flüssigen Farbelementes beim Einspritzen der Vergussmasse in die Formenkavitäten ist sichergestellt, dass die Formenteile schon die gewünschte äußere Farbe aufweisen. Somit bedarf es nur noch einer äußeren, die Farbe des Türaußengriffes schützenden Lackierung, um den Türaußengriff fertig zu stellen.

In einer besonderen Ausführungsform der Erfindung weist die Formenkavität eine polierte Oberfläche auf, wodurch ein farbiges, durchgefärbtes Formenteil durch das erfindungsgemäße Spritzgießverfahren erzielbar ist, dessen Oberfläche zusätzlich hochglänzend ist. Vorzugsweise wird die Oberfläche der Formenkavität in mehreren Arbeitsschritten poliert und weist im Endzustand eine Oberflächenrauigkeit auf, die nahezu gegen Null geht.

Vorteilhafterweise sind die Kunststoffgranulate, die in das Spritzgießmaschine eingeführt werden, transparent oder teiltransparent, wodurch überraschenderweise in Kombination mit dem flüssigen Farbelement Formenteile mit einer hohen Farbbrillianz erzielt werden. Das flüssige Farbelement kann beispielsweise mit den Kunststoffgranulaten zuvor vermischt werden, wobei anschließend diese gemeinsam in die Spritzgießmaschine durch den Eintrittsbereich eingebracht werden. Eine endgültige Vermischung erfolgt dann innerhalb der Spritzgießmaschine. Ebenfalls vorteilhaft ist, wenn das flüssige Farbelement direkt in die Spritzgießmaschine geleitet wird, in dem die Kunststoffgranulate plastifiziert werden.

Als Material der Kunststoffmasse für das Formenteil sind alle Kunststoffe zu verwenden, die spritzgießbar sind. Vorzugsweise finden Polyamide (PA), Polycarbonate (PC), Acrylnitril-Butadien-Styrol-Copolymere (ABS), Polymethylmethacrylate (PMMA) oder Acrylnitril-Styrol-Acrylester-Copolymere (ASA) als Kunststoffgranulate Verwendung.

In einer bevorzugten Ausführungsform des erfindungsgemäßen Verfahrens wird das flüssige Farbelement an einem Eintrittsbereich der Formenkavitäten der Kunststoffmasse zugeführt. Hierdurch wird eine zufriedenstellende Durchmischung der Vergussmasse gewährleistet, bevor die gleichverteilte Vergussmasse in die Formenkavität des Spritzgießwerkzeuges gespritzt wird. Vorteilhafterweise wird die Spritzgießmaschine beheizt, wobei der Eintrittsbereich eine Temperatur zwischen 20°C und 80°C, vorzugsweise zwischen 30°C und 70°C und besonders bevorzugt zwischen 40°C und 60°C aufweist. Am Eintrittsbereich kann ein Fülltrichter angeordnet sein, mittels dessen das Kunststoffgranulat in die Spritzgießmaschine zugeführt wird. Durch die entsprechende Temperierung des Eintrittsbereiches kann eine gute Rieselfähigkeit des Kunststoffgranulates erzielt werden. Das flüssige Farbelement kann ebenfalls über den Fülltrichter in die Spritzgießmaschine eingebracht werden. Hierbei ist es denkbar über einen flexiblen Schlauch das Farbelement der Kunststoffmasse, die sich innerhalb der Spritzgießmaschine befindet, zuzugeben.

Weiterhin kann vorteilhaft sein, das flüssige Farbelement tröpfchenweise der Kunststoffmasse zuzuführen. Das Farbelement kann hierbei ein Konzentrat sein, welches der Kunststoffmasse innerhalb der Spritzgießmaschine zugesetzt wird. Vorteilhafterweise wird kontinuierlich das flüssige Farbelement der Kunststoffmasse beigemengt. In einer bevorzugten Ausführungsalternative weist das flüssige Farbelement in der plastifizierten Kunststoffmasse einen Volumenanteil auf, der geringer ist als 5%, vorzugsweise geringer ist als 2%, mehr bevorzugt geringer ist als 1% und besonders bevorzugt geringer ist als 0,5%. Der genannte Volumenanteil reicht vollkommen aus, um Formenteile mit der entsprechenden Farbe herzustellen.

Zweckmäßigerweise weist die Vergussmasse, dass heißt die plastifizierte Kunststoffmasse mit dem flüssigen Farbelement, innerhalb der Formenkavität einen Druck von 300 bar bis 700 bar auf. Hierbei wird die in der Spritzgießmaschine gleichmäßig verteilte Vergussmasse mit einem Druck von ca. 400 bar bis 2000 bar in die Formenkavität eingespritzt. Unter dem hohen Druck erfolgt eine sehr gleichmäßige Vernetzung der Farbelemente, so dass die Oberflächen der fertigen Formenteile eine gleichmäßige Farbverteilung erhält. Etwaige Kratzer oder Beschädigungen an der Oberfläche der Formenteile werden weitestgehend vom Betrachter nicht wahrgenommen, da das Formenteil durchgängig entlang seines Querschnittes durchgefärbt ist.

Eine weitere vorteilhafte Ausgestaltung des erfindungsgemäßen Verfahrens zeichnet sich dadurch aus, dass die Kunststoffmasse Glasfasern und/oder Kohlenstofffasern und/oder Aramidfasern aufweist. Durch die Verwendung der genannten Fasern entsteht ein Formenteil, welches eine erhöhte Stabilität aufweist. Dadurch ist es möglich, weniger Kunststoffmasse für die Produktion des Türaußengriffes zu verwenden. Dieses ist insbesondere für die Reduktion der Gesamtmasse des Kraftfahrzeuges wichtig, was in einer Reduktion des Kraftstoffverbrauches resultiert. Darüber hinaus weisen insbesondere glasfaserverstärkte Kunststoffe bei hoher Krafteinwirkung ein kontinuierliches Zersplitterungsverhalten auf. Dieses resultiert in einem optimalen Energieabbau und somit einem erhöhten Schutz der Insassen eines Kraftfahrzeuges bei einem Unfall.

Damit aus den Formenteilen ein Türaußengriff erstellt werden kann, weisen erstere in einer weiteren vorteilhaften Ausgestaltung ein Rast- und/oder ein Gegenrastmittel auf. Werden die Formenteile gemäß den Verfahrensschritten der Erfindung zusammengefügt, verbinden sich die Rast- und Gegenrastmittel form- und/oder kraftschlüssig. Dadurch bilden die einzelnen Formenteile den gesamten Körper des Türaußengriffes.

Entsprechend dieser vorteilhaften Ausführungsvariante können Rastmittel an einem der Formenteile angeformt sein und in die Gegenrastmittel des zusammenwirkenden Formenteiles einrasten. Vorteilhafterweise handelt es sich bei den Rastmitteln um Clip-Verbindungen, welche durch die leichte Flexibilität des Kunststoffes in einer form- und/oder kraftschlüssigen Verbindung resultieren.

Da es erfindungsgemäß vorgesehen ist im Rahmen des Verfahrens die Formenteile zusammenzufügen, den so entstehenden Türaußengriff zu lackieren und im Anschluss wieder zu zerlegen, ist eine weitere vorteilhafte Ausgestaltung des erfindungsgemäßen Verfahrens dadurch ausgezeichnet, dass der Schritt (b) mindestens die folgenden Schritte aufweist:
(i) Einsetzen wenigstens einer Koppelsicherung in das Rast- und/oder das Gegenrastmittel des ersten und/oder zweiten Formenteiles;
(ii) Konturschlüssiges Zusammenfügen der wenigstens zwei Formenteile;
(iii) Ineinandergreifen der Rast- und der Gegenrastmittel der Formenteile;
(iv) Verhindern einer kraft- und/oder formschlüssig Verbindung der Rast- und Gegenrastmittel der Formenteile durch die Koppelsicherung.
Die erfindungsgemäße Koppelsicherung verhindert somit das Ineinanderrasten des Rast- und des Gegenrastmittels. Folglich ist ein einfaches Zerlegen gemäß Schritt (d) des Türaußengriffes in seine Bestandteile nach dem Lackieren gemäß Schritt (c) möglich. Bei der Koppelsicherung kann es sich beispielhaft um ein blattartiges Element handeln, welches in eines der Rast- bzw. Gegenrastmittel eingesetzt wird. Vorteilhafterweise weist die Koppelsicherung eine Härte auf, die geringer ist als die der Formenteile bzw. des Rast- /Gegenrastmittels, um so eine Beschädigung der äußeren Oberfläche zu verhindern.

Eine weitere vorteilhafte Ausführungsvariante des erfindungsgemäßen Verfahrens ist dadurch gekennzeichnet, dass der Schritt (c) mindestens die folgenden Schritte aufweist:
(i) Beschichten des Türaußengriffes mit einem Klebemittel;
(ii) Einbringen des Türaußengriffes und einer Lackfolie in ein Überdruck-Formwerkzeug;
(iii) Erwärmung der Lackfolie auf oder über eine Gastemperatur eines polymeren Bestandteiles der Lackfolie;
(iv) Aufziehend der Lackfolie auf die Oberfläche des Türaußengriffes;
(v) Anpressen der Lackfolie durch einen Gasdruck im Überdruck-Formwerkzeug;
(vi) Thermisches Aushärten des Klebemittels.

Das beschriebene erfindungsgemäße Verfahren ermöglicht es, in einem einzigen Beschichtungsprozess eine die Oberfläche des Türaußengriffes abdeckende Decklackschicht aufzubringen. Insbesondere bedarf es keiner glättenden Vorbehandlung der Oberflächen der Formenteile. Weiterhin muss die so erzeugte Oberfläche oder die Lackschicht nicht poliert werden. Dabei ist unter dem Begriff "Decklackschicht" das gesamte Lacksystem zu verstehen, dass die Oberfläche des Formenteiles abdeckt, insbesondere kann es sich um mehrere Lackschichten unterschiedlicher Funktionen handeln. Das erfindungsgemäße Verfahren sieht vor, die Außenfläche des Türaußengriffes mit einem Klebemittel zu beschichten. Hierzu können die gängigen Kleber verwendet werden, wie insbesondere Polyurethan basierte Kleber, welche bevorzugt thermisch gehärtet werden. Vorzugsweise wird das Klebemittel mit einer Dicke aufgetragen, die unterhalb oder nahe bei einer Rautiefe der Formenteiloberfläche liegt. Somit wird verhindert, dass der Kleber vollständig die Vertiefungen der rauen Oberfläche füllt. Im Anschluss daran wird die Lackfolie in das Überdruck-Formwerkzeug eingelegt und über dem Türaußengriff angeordnet. Anschließend wird die Lackfolie erwärmt um eine günstige Flexibilität und Formbarkeit zu erreichen. Danach erfolgt ein Aufziehen der Lackfläche auf die Oberfläche des Bauteiles. Um eine glatte Oberfläche der Lackfolie zu erreichen, sollte diese mit einer leichten Zugspannung fixiert werden. Die darauf folgende Härtung des Klebemittels erfolgt bevorzugt thermisch. Die Härtetemperatur sollte dabei auf einen Wert unterhalb der Gas- oder Entweichungstemperatur der polymeren Bestandteile der Lackfolie eingestellt sein.

Eine weitere vorteilhafte Variante des erfindungsgemäßen Verfahrens zeichnet sich dadurch aus, dass der Schritt (c) mindestens die folgenden Schritte aufweist:
(i) dass auf das erste und das zweite Formenteil ein Füllerbeschichtungsmittel aufgebracht wird;
(ii) das Füllerbeschichtungsmittel ein Bindemittel enthält;
(iii) das Bindemittel durch eine energiereiche Strahlung, insbesondere durch UV-Strahlung gehärtet wird;
(iv) und anschließend eine Deckbeschichtung appliziert wird.

Die erfindungsgemäß eingesetzten Füllerbeschichtungsmittel können mittels energiereicher Strahlung über eine radikalische und/oder kationische Polymerisation vernetzen. Als mittels energiereicher Strahlung härtbare Bindemittel können insbesondere durch radikalische oder durch kationische Polymerisation vernetzbare Bindemittel Verwendung finden. Bei ersteren entstehen durch Einwirkung von energiereicher Strahlung auf die Photoinitiatoren Radikale, die dann die Vernetzungsreaktion auslösen. In Gegensatz dazu werden bei den kationisch härtenden Systemen durch die Bestrahlung aus Initiatoren Lewis-Säuren gebildet, die dann ihrerseits die Vernetzungsreaktion auslösen. Bei den radikalisch härtenden Bindemitteln kann es sich z. B. um Prepolymere, wie Poly- oder Oligomere, die radikalisch polymerisierbare olefinische Doppelbindungen im Molekül aufweisen, handeln. Als Bindemittel für kationisch polymerisierbare Systeme können beispielsweise polyfunktionelle Epoxyoligomere, die mehr als zwei Epoxygruppen im Molekül enthalten, verwendet werden.

Zur Bestrahlung werden vorzugsweise UV-Strahlungsquellen mit Emissionen im Wellenlängenbereich von 150 bis 440 nm, insbesondere von 200 bis 400 nm, eingesetzt. Dabei haben sich insbesondere dotierte Quecksilberhochdruck-, mitteldruck- und niederdruckstrahler, Gasentladungsröhren, wie z. B. Xenonniederdrucklampen, gepulste und ungepulste UV-Laser, UV-Punktstrahler, wie z. B. UV-emittierende Dioden und Schwarzlichtröhren als vorteilhaft erwiesen. Um eine homogene Härtung der Deckbeschichtung zu erreichen, sollen an der Oberfläche des zu härtenden Überzuges eine Beleuchtungsstärke von mindestens 15 Megalux, bevorzugt von 20 bis 80 Megalux erzeugt werden. Nach teilweiser oder vollständiger Härtung der Füllerschicht kann im erfindungsgemäßen Verfahren auf die Füllerschicht eine Deckbeschichtung aus einer farb- und/oder effektgebenden Basislackschicht und einer transparenten Klarlackschicht oder eine Deckbeschichtung aus einem pigmentierten Einschichtdecklack aufgebracht werden.

Mit dem erfindungsgemäßen Verfahren lassen sich Mehrschichtüberzüge mit großer Härte, hoher Kratzfestigkeit sowie sehr guter Chemikalien- und Wasserbeständigkeit herstellen. Die einzelnen Lackschichten zeigen eine sehr gute Zwischenschichthaftung, und Anlöseresistenz gegenüber darunter bzw. darüberliegenden Lackschichten.

Eine weitere vorteilhafte Ausführungsvariante des erfindungsgemäßen Verfahrens zeichnet sich dadurch aus, dass der Schritt (e) mindestens die folgenden Schritte umfasst:
(i) dass die Elektronikeinheit auf einem Trägerelement aufgebracht ist und mittels des Trägerelementes an einem Formenteil angeordnet wird;
(ii) ein Koppelglied das Trägerelement form- und/oder kraftschlüssig mit dem Formenteil verbindet.

Bei dem Trägerelement kann es sich beispielsweise um eine Platine (PCB, Printed Circuit Board) handeln, auf der sowohl die Elektronikbausteine der Elektronikeinheit als auch die Verbindungsleitungen angeordnet sind. Je nach Anwendungszweck kann das isolierende Grundmaterial der Platine flexibel oder starr ausgebildet sein. Zur Montage des Trägerelementes auf einem oder mehreren der Formenteile kann das Koppelglied als ein Clipelement ausgeformt sein, welches mit einem Gegenelement im Formenteil kraft- und/oder formschlüssig zusammenwirkt. Denkbar ist es ebenfalls, dass das Trägerelement Bohrungen aufweist, durch die Schrauben eingebracht werden können, welcher zu einer Verbindung mit dem Formenteil dienen.

Im Rahmen einer weiteren vorteilhaften Ausführungsform des erfindungsgemäßen Verfahrens wird die Elektronikeinheit vor dem Einbau gemäß Schritt (e) mit einer Vergussmasse mediendicht vergossen. Als Vergussmasse bietet sich dabei insbesondere ein synthetischer Kunstharz an, der die Elektronikeinheit vollständig umschließt. Beispielsweise kann sich bei dem Kunstharz um Polyesterharz, Polyurethanharz, Eboxidharz, Silikonharz und/oder Vinylesterharz handeln. Die genannten Harze weisen eine gute Mediendichtigkeit auf und verhindern somit, dass Umwelteinflüsse wie etwa Feuchtigkeit, in die Elektronikeinheit eindringen können. Laut des erfindungsgemäßen Verfahrens wird die Elektronikeinheit erst nach der Lackierung des Türaußengriffes integriert. Folglich bietet es sich an, die Elektronikeinheit zuerst einer Funktionsüberprüfung zu unterziehen, dann mittels der Vergussmasse zu vergießen und im Anschluss in den Türaußengriff zu integrieren. Wird letzterer allerdings in einem Kraftfahrzeug eingesetzt, das besonders starken Umwelteinflüssen ausgesetzt ist, so kann alternativ auch nach dem Zusammenfügen der wenigstens zwei Formenteile gemäß Schnitt (f) die Elektronikeinheit mit der Vergussmasse eingegossen werden. Dabei füllt die Vergussmasse einen Innenbereich des Türaußengriffes vollständig aus.

Weitere Vorteile, Merkmale und Einzelheiten der Erfindung ergeben sich aus der nachfolgenden Beschreibung, in der unter Bezugnahme auf die Zeichnungen mehrere mögliche Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines Türaußengriffes für ein Kraftfahrzeug und
- Figur 2: ein Flussdiagramm des erfindungsgemäßen Verfahrens.

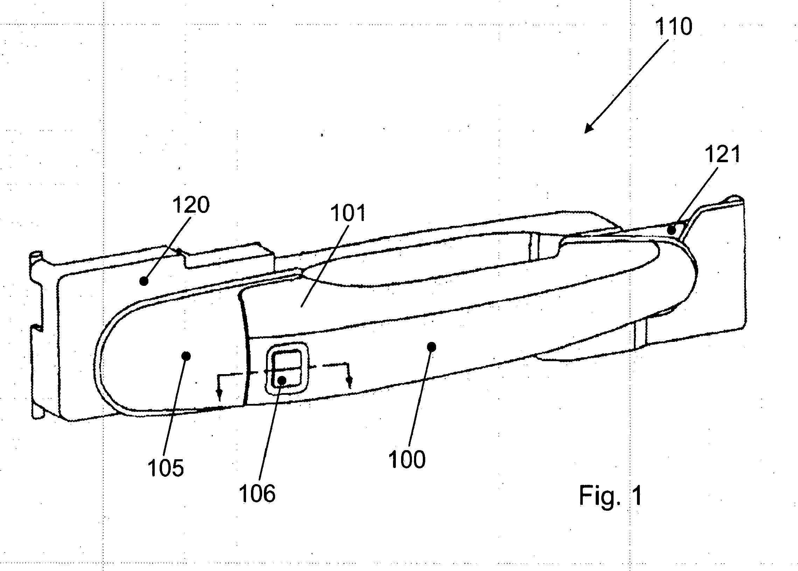

In Fig. 1 ist ein Türaußengriffsystem 110 dargestellt. Das Türaußengriffsystem 110 weist ein Basiselement 120 und einen Türaußengriff 100 auf. Das Basiselement 120 ist in einer nicht dargestellten Tür eines Kraftfahrzeuges integriert. Im Allgemeinen wird dazu das Basiselement 120 mittels Klebe- oder Schraubverbindung an ein Innenblech der Außentür fixiert. An einem unteren Ende 121 des Basiselementes 120 ist der Türaußengriff 100 drehbeweglich gelagert. Einem Benutzer ist es dadurch möglich, den Türaußengriff 100 aus der Zeichnungsebene herauszuziehen und so eine nicht dargestellte Schließvorrichtung zu entriegeln. Aus Gründen der Ästhetik schließt ein vorderes Ende 101 des Türaußengriffes 100 mit einer Abdeckhülse 105 ab. Die Abdeckhülse 105 ist ebenfalls mit dem Basiselement 120 verbunden. Innerhalb des Türaußengriffes 100 ist eine Elektronikeinheit angeordnet, die über ein Schalterelement 106 betätigbar ist. In dem dargestellten beispielhaften Ausführungsbeispiel ist das Schalterelement 106 auf einer Oberfläche des Türaußengriffes 100 angeordnet. Solche Art Schalterelemente 106 können beispielhaft dazu dienen, mit einem nicht dargestellten elektronischen Schlüssel in drahtloser Datenkommunikation zu stehen. Durch den Austausch eines Codes und anschließender positiver Auswertung durch die Elektronikeinheit ist das Kraftfahrzeug fernbedienbar ent- und/oder verriegelbar.

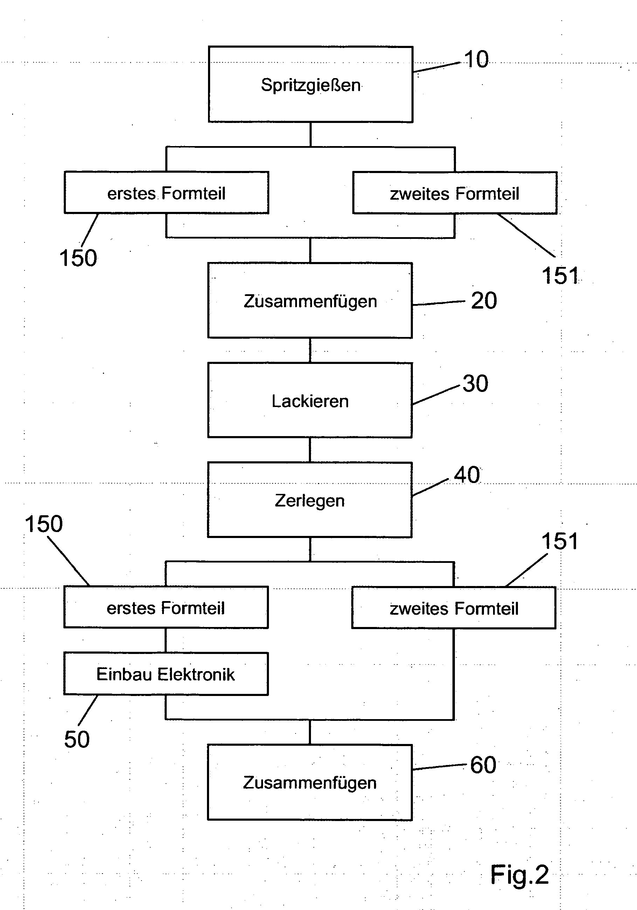

In Fig. 2 ist ein Flussdiagramm zur Verdeutlichung des erfindungsgemäßen Verfahrens dargestellt. In einem ersten Schritt wird ein erstes Formenteil 150 und ein zweites Formenteil 151 durch ein Spritzgießen 10 erstellt. Dazu wird eine Menge einer geschmolzenen Kunststoffmasse in eine Mehrzahl von Formenkavitäten eingebracht, um diese im Wesentlichen zu füllen. Anschließend erfolgt durch Einbringen von unter Druck stehendem Gas ein Anpressen der Kunststoffmasse an die Innenseiten der Formenkavitäten. Nach einem Erstarren und Ausstoßen des Gases können die so gebildeten ersten 150 und zweiten Formenteile 151 aus den Formenkavitäten entnommen werden.

Aufgrund der hohen Güte, mit welcher die Oberflächen der Formenteile 150, 151 im Rahmen des erfindungsgemäßen Verfahrens hergestellt werden können, bedarf es im Allgemeinen keiner Überarbeitung der äußeren Bereiche oder Randbereiche. Vielmehr ist ein Zusammenfügen 20 der Formenteile 150, 151 möglich, um so den Türaußengriff 100 zu bilden. Erfindungsgemäß schließt sich an das Zusammenfügen 20 der Formenteile 150, 151 ein Lackieren 30 an. Dadurch, dass zu diesem Zeitpunkt noch keine Elektronikeinheit in die Formenteile 150, 151 eingebracht ist, kann diese durch das Lackieren 30 nicht geschädigt werden. Im Rahmen des Lackierens 30 wird die Oberfläche des Türaußengriffes 100 mit einem Lack überzogen, um so den Türaußengriff 100 vor Umwelteinflüssen zu schützen und gleichzeitig ästhetischen Ansprüchen an das Kraftfahrzeug gerecht zu werden.

Nach dem Lackieren 30 der Oberfläche des Türaußengriffes 100 erfolgt ein Zerlegen 40 des Türaußengriffes 100 in die Formenteile 150, 151. Zur Erleichterung eines Einbaus 50 ist die Elektronikeinheit auf einem Trägerelement angeordnet und kann mittels eines Koppelgliedes form- und/oder kraftschlüssig mit dem Formenteil verbunden werden. Als vorteilhafter haben sich Clip-artig ausgeformte Koppelglieder herausgestellt.

Nach dem die Elektronikeinheit mit den Formenteilen 150, 151 verbunden ist, können die beiden letzten genannten Teile zusammengefügt 60 werden. Um eine dauerhafte Verbindung sicherzustellen, weisen die beiden Formenteile 150, 151 Rast- und/oder Gegenrastmittel auf, die eine kraft- und/oder formschlüssige Verbindung erzeugen. Dadurch, dass die Türaußengriffe 100 im Rahmen des erfindungsgemäßen Verfahrens zuerst lackiert 30 und dann mit der Elektronikeinheit bestückt 50 werden, ist sichergestellt, dass durch Lackreste keine Beschädigung der Elektronikeinheiten auftreten und folglich die Fehlerquote bei der Produktion deutlich reduziert wird. Darüber hinaus wird durch das erfindungsgemäße Verfahren eine deutliche Reduktion der Herstellungszeit des Türaußengriffes erreicht.

### Bezugszeichenliste

- 10: Spritzgießen
- 20: Zusammenfügen
- 30: Lackieren
- 40: Zerlegen
- 50: Einbau der Elektronikeinheit
- 60: Zusammenfügen des Türaußengriffes 100

- 100: Türaußengriff
- 101: vorderes Ende des Türaußengriffes 100
- 105: Abdeckhülse
- 106: Schalterelement

- 110: Türaußengriffsystem

- 120: Basiselement
- 121: unteres Ende des Basiselementes

- 150: erstes Formenteil
- 151: zweites Formenteil

## Patentansprüche

1. Verfahren zur Herstellung eines Türaußengriffes (100) für Kraftfahrzeuge, wobei das Verfahren die folgenden Schritte aufweist:
(a) Spritzgießen (10) wenigstens eines ersten Formenteiles (150) und eines zweiten Formenteiles (151) mittels einer Kunststoffmasse;
(b) Erstellen (20) des Türaußengriffes (100) aus den wenigstens zwei Formenteilen (150,151);
(c) Lackieren (30) einer Oberfläche des Türaußengriffes (100);
(d) Zerlegen (40) des Türaußengriffes (100) in die wenigstens zwei Formenteile (150,151);
(e) Einbauen (50) einer Elektronikeinheit in mindestens eines der beiden Formenteile (150,151);
(f) Zusammenfügen (60) der wenigstens zwei Formenteile (150,151) und der Elektronikeinheit zu dem Türaußengriff (100).

2. Verfahren zur Herstellung eines Türaußengriffes (100) nach Anspruch 1,
**dadurch gekennzeichnet,**
**dass** der Schritt (a) mindestens die folgenden Schritte aufweist:
(i) Einbringen einer Menge der geschmolzenen Kunststoffmasse in eine erste und eine zweite Formenkavität, um die erste und zweite Formenkavität im Wesentlichen zu füttern;
(ii) Einbringen von unter Druck stehendem Gas oder von einer unter Druck stehenden Flüssigkeit in die Kunststoffmasse in der ersten und zweiten Formenkavität;
(iii) Zulassen, dass die Kunststoffmasse im der ersten und zweiten Formenkavität erstarrt;
(iv) Ausstoßen des Gases oder der Flüssigkeit aus den Formenkavitäten;
(v) Entfernen des ersten (150) und des zweiten Formenteiles (151) aus den Formenkavitäten.

3. Verfahren nach einem der vorhergehenden Ansprüche,
**dadurch gekennzeichnet,**
**dass** der Schritt (a) derart ausgestaltet ist, dass ein flüssiges Farbelement in die Kunststoffmasse eingebracht wird, wobei die Kunststoffmasse und das flüssige Farbelement derart vermischt werden, dass sich eine homogenisierte Vergussmasse bildet, die in die erste und/oder die zweite Formenkavität eingespritzt wird, wodurch das gleichmäßig durchgefärbte erste (150) und/oder zweite Formenteile (151) hergestellt werden.

4. Verfahren nach einem der vorhergehenden Ansprüche,
**dadurch gekennzeichnet,**
**dass** die Kunststoffmasse aus einer Vielzahl an Kunststoffgranulaten gebildet ist, insbesondere, dass die Kunststoffgranulate transparent oder teiltransparent sind, insbesondere, dass als Material für das Kunststoffgranulat PC, PMMA, ABS oder PA eingesetzt wird.

5. Verfahren nach einem der Ansprüche 3 oder 4,
**dadurch gekennzeichnet,**
**dass** die Kunststoffmasse mit dem flüssigen Farbelement innerhalb der Formenkavitäten einen Druck von 300 bar bis 700 bar aufweist.

6. Verfahren nach einem der vorhergehenden Ansprüche,
**dadurch gekennzeichnet,**
**dass** die Kunststoffmasse Glasfasern und/oder Kohtenstofffasern und/oder Aramidfasern aufweist.

7. Verfahren nach einem der vorhergehenden Ansprüche,
**dadurch gekennzeichnet,**
**dass** das erste (150) und das zweite Formenteile (151) ein Rast- und/oder ein Gegenrastmittel aufweisen, welche in einer Stellung kraft- und/oder formschlüssig miteinander verbunden werde, um den Türaußengriff (100) zu bilden.

8. Verfahren nach Anspruch 7,
**dadurch gekennzeichnet,**
**dass** der Schritt (b) mindestens die folgenden Schritte aufweist:
(i) Einsetzen wenigstens einer Koppelsicherung in das Rast- und/oder das Gegenrastmittel des ersten (150) und/oder zweiten Formenteiles (151);
(ii) Konturschlüssiges Zusammenfügen der wenigstens zwei Formenteile (150,151);
(iii) Ineinandergreifen der Rast- und der Gegenrastmittel der Formenteile (150,151);
(iv) Verhindern einer kraft- und/oder formschlüssig Verbindung der Rastund der Gegenrastmittel der Formenteile (150,151) durch die Koppelsicherung.

9. Verfahren nach einem der vorhergehenden Ansprüche,
**dadurch gekennzeichnet,**
**dass** der Schritt (c) mindestens die folgenden Schritte aufweist:
(i) Beschichten des Türaußengriffes (100) mit einem Klebemittel;
(ii) Einbringen des Türaußengriffes (100) und einer Lackfolie in ein Überdruck-Formwerkzeug;
(iii) Erwärmung der Lackfolie auf oder über eine Gastemperatur eines polymeren Bestandteiles der Lackfolie;
(iv) Aufziehen der Lackfolie auf die Oberfläche des Türaußengriffes (100);
(v) Anpressen der Lackfolie durch einen Gasdruck im Überdruck-Formwerkzeug;
(vi) Thermisches Aushärten des Klebemittels.

10. Verfahren nach einem der vorhergehenden Ansprüche,
**dadurch gekennzeichnet,**
**dass** der Schritt (c) mindestens die folgenden Schritte aufweist:
(i) **dass** auf das erste (150) und das zweite Formenteil (151) ein Füllerbeschichtungsmittel aufgebracht wird;
(ii) das Füllerbeschichtungsmittel ein Bindemittel enthält;
(iii) das Bindemittel durch eine energiereiche Strahlung, insbesondere durch UV-Strahlung gehärtet wird;
(iv) und anschließend eine Deckbeschichtung appliziert wird.

11. Verfahren nach Anspruch 10,
**dadurch gekennzeichnet,**
**dass** die Deckbeschichtung aus einer farb- und/oder effektgebenden Basislacksicht und einer transparenten Klarlackschicht oder aus einem pigmentierten Einschichtdecklack gebildet wird.

12. Verfahren nach einem der vorhergehenden Ansprüche,
**dadurch gekennzeichnet,**
**dass** der Schritt (e) mindestens die folgenden Schritte umfasst:
(i) **dass** die Elektronikeinheit auf einem Trägerelement aufgebracht ist und mittels des Trägerelementes an einem Formenteil (150,151) angeordnet wird;
(ii) ein Koppelglied das Trägerelement form- und/oder kraftschlüssig mit dem Formenteil (150,151) verbindet.

13. Verfahren nach einem der vorhergehenden Ansprüche,
**dadurch gekennzeichnet,**
**dass** die Elektronikeinheit vor dem Einbauen gemäß Schritt (e) mit einer Vergussmasse mediendicht vergossen wird.

14. Verfahren nach einem der Ansprüche 1 bis 12,
**dadurch gekennzeichnet,**
**dass** nach dem Zusammenfügen der wenigstens zwei Formenteile (150,151) gemäß Schnitt (f) die Elektronikeinheit mit der Vergussmasse eingegossen wird, insbesondere, dass die Vergussmasse einen Innenbereich des Türaußengriffes (100) vollständig ausfüllt.

## Claims

1. A method for manufacturing an exterior door handle (100) for motor vehicles, wherein the method has the following steps:
(a) injection moulding (10) of at least one first moulded part (150) and one second moulded part (151) by means of a moulding compound;
(b). constructing (20) the exterior door handle (100) from the at least two moulded parts (150,151);
(c) painting (30) a surface of the exterior door handle (100);
(d) disassembling (40) the exterior door handle (100) into the at least two moulded parts (150,151);
(e) installing (50) an electronic unit in at least one of the two moulded parts (150,151);
(f) assembling (60) the at least two moulded parts (150,151) and the electronic unit into the exterior door handle (100).

2. The method for manufacturing an exterior door handle (100) according to Claim 1,
**characterised in that**
step a) has at least the following steps:
(i) introducing a quantity of the molten moulding compound into a first and a second mould cavity in order substantially to fill the first and second mould cavity;
(ii) introducing pressurised gas or a pressurised liquid into the moulding compound in the first and second mould cavities;
(iii) allowing the moulding compound to solidify in the first and second mould cavities;
(iv) expelling the gas or the liquid from the mould cavities;
(v) removing the first (150) and the second moulded part (151) from the mould cavities.

3. The method according to one of the previous claims,
**characterised in that**
step a) is configured such that a liquid colour element is introduced into the moulding compound, wherein the moulding compound and the liquid colour element are mixed such that there is formed a homogenised casting compound which is injected into the first and/or the second mould cavity, whereby the uniformly imbued first (150) and/or second moulded parts (151) are manufactured.

4. The method according to one of the previous claims,
**characterised in that**
the moulding compound is formed from a plurality of plastics pellets, in particular **in that** the plastics pellets are transparent or partially transparent, in particular **in that** PC, PMMA, ABS or PA is used as material for the plasics pellets.

5. The method according to one of Claims 3 or 4,
**characterised in that**
the moulding compound with the liquid colour element has a pressure of 300 bar to 700 bar within the mould cavities.

6. The method according to one of the previous claims,
**characterised in that**
the moulding compound has fibre glass and/or carbon fibres and/or aramid fibres.

7. The method according to one of the previous claims,
**characterised in that**
the first (150) and the second moulded parts (151) have a catching means and/or a countercatching means which in one position are connected to one another in a form-fitting and/or non-positive manner, in order to form the exterior door handle (100).

8. The method according to Claim 7,
**characterised in that**
step b) has at least the following steps:
(i) inserting at least one coupling safeguard into the catching means and/or the countercatching means of the first (150) and/or second moulded parts (151);
(ii) contour-fitting assembly of the at least two moulded parts (150,151);
(iii) engaging the catching means and countercatching means of the moulded parts (150,151);
(iv) preventing a non-positive and/or form-fitting connection of the catching means and the countercatching means of the moulded parts (150,151) by means of the coupling safeguard.

9. The method according to one of the previous claims,
**characterised in that**
step c) has at least the following steps:
(i) coating the exterior door handle (100) with an adhesive;
(ii) introducing the exterior door handle (100) and a paint film into an excess pressure moulding tool;
(iii) heating the paint film to or above a gas temperature of a polymer component of the paint film;
(iv) lifting the paint film up to the surface of the exterior door handle (100);
(v) pressing on the paint film by means of a gas pressure in the excess pressure mould tool;
(vi) thermal curing of the adhesive.

10. The method according to one of the previous claims,
**characterised in that**
step c) has at least the following steps:
(i) that a filler coating means is applied to the first (150) and the second mould member (151);
(ii) the filler coating means contains a binder material;
(iii) the binder material is hardened by a high-energy radiation, in particular by UV radiation;
(iv) and then a cover coating is applied.

11. The method according to Claim 10,
**characterised in that**
the cover coating is formed from a colour-giving and/or effect-giving base paint layer and a transparent coat of varnish or from a pigmented one-layer cover paint.

12. The method according to one of the previous claims,
**characterised in that**
step e) has at least the following steps:
(i) that the electronic unit is attached to a carrier and by means of the carrier is arranged at a moulded part (150, 151);
(ii) a coupling element connects the carrier to the moulded part (150, 151) in a form-fitting and/or non-positive manner.

13. The method according to one of the previous claims,
**characterised in that**
the electronic unit is cast with a casting compound prior to installation in accordance with step (e), in a manner impervious to the media.

14. The method according to one of Claims 1 to 12,
**characterised in that**
prior to the assembly of the at least two moulded parts (150, 151 according to step (f), the electronic unit is cast in with the casting compound, in particular that the casting compound completely fills in an inner region of the exterior door handle (100).

## Revendications

1. Procédé de fabrication d'une poignée de porte extérieure (100) pour véhicules automobiles, lequel procédé présente les étapes suivantes :
(a) moulage par injection (10) d'au moins une première pièce moulée (150) et d'une deuxième pièce moulée (151) au moyen d'une masse de matière synthétique ;
(b) assemblage (20) de la poignée de porte extérieure (100) à partir desdites au moins deux pièces moulées (150, 151) ;
(c) mise en peinture (30) d'une surface de la poignée de porte extérieure (100) ;
(d) désassemblage (40) de la poignée de porte extérieure (100) en lesdites au moins deux pièces moulées (150, 151) ;
(e) incorporation (50) d'une unité électronique dans au moins une des deux pièces moulées (150, 151) ;
(f) assemblage (60) desdites au moins deux pièces moulées (150, 151) et de l'unité électronique en ladite poignée de porte extérieure (100).

2. Procédé de fabrication d'une poignée de porte extérieure (100) selon la revendication 1,
**caractérisé en ce**
**que** l'étape (a) présente au moins les étapes suivantes :
(i) introduction d'une quantité de la masse de matière synthétique fondue dans une première et une deuxième cavité de moule pour remplir essentiellement les première et deuxième cavités de moule ;
(ii) introduction d'un gaz sous pression ou d'un liquide sous pression dans la masse de matière synthétique dans les première et deuxième cavités de moule ;
(iii) laisser la masse de matière synthétique se solidifier dans les première et deuxième cavités de moule ;
(iv) expulsion du gaz ou du liquide des cavités de moule ;
(v) enlèvement de la première (150) et de la deuxième pièce moulée (151) des cavités de moule.

3. Procédé selon l'une des revendications précédentes,
**caractérisé en ce**
**que** l'étape (a) est conçue de manière qu'un élément colorant liquide soit introduit dans la masse de matière synthétique, la masse de matière synthétique et l'élément colorant liquide étant mélangés de manière qu'il se forme une masse de coulée homogénéisée qui est injectée dans la première et/ou la deuxième cavité de moule, moyennant quoi les première (150) et deuxième (151) pièces moulées uniformément colorées sont réalisées.

4. Procédé selon l'une des revendications précédentes,
**caractérisé en ce**
**que** la masse de matière synthétique est formée d'une pluralité de granulés de matière synthétique, en particulier que les granulés de matière synthétique sont transparents ou semi-transparents, en particulier que l'on utilise PC, PMMA, ABS ou PA comme matériau pour le granulat de matière synthétique.

5. Procédé selon l'une des revendications 3 ou 4,
**caractérisé en ce**
**que** la masse de matière synthétique avec l'élément colorant liquide présente à l'intérieur des cavités de moule une pression de 300 bars à 700 bars.

6. Procédé selon l'une des revendications précédentes,
**caractérisé en ce**
**que** la masse de matière synthétique présente des fibres de verre et/ou des fibres de carbone et/ou des fibres d'aramide.

7. Procédé selon l'une des revendications précédentes,
**caractérisé en ce**
**que** la première (150) et la deuxième (151) pièces moulées présentent un moyen d'enclenchement et/ou un moyen d'enclenchement complémentaire qui sont reliés ensemble par conjugaison de forces et/ou complémentarité de formes pour former la poignée de porte extérieure (100).

8. Procédé selon la revendication 7,
**caractérisé en ce**
**que** l'étape (b) présente au moins les étapes suivantes :
(i) insertion d'au moins un dispositif de sécurité anti-couplage dans le moyen d'enclenchement et/ou le moyen d'enclenchement complémentaire de la première (150) et la deuxième pièce moulée (151) ;
(ii) assemblage avec ajustement des contours desdites au moins deux pièces moulées (150, 151) ;
(iii) engagement des moyens d'enclenchement et d'enclenchement complémentaire des pièces moulées (150, 151) ;
(iv) empêchement d'une liaison par conjugaison de forces et/ou complémentarité de formes des moyens d'enclenchement et d'enclenchement complémentaire des pièces moulées (150, 151) par le dispositif de sécurité anti-couplage.

9. Procédé selon l'une des revendications précédentes,
**caractérisé en ce**
**que** l'étape (c) présente au moins les étapes suivantes :
(i) enduction de la poignée de porte extérieure (100) d'un produit adhésif ;
(ii) introduction de la poignée de porte extérieure (100) et d'une feuille de peinture dans un moule à surpression ;
(iii) réchauffement de la feuille de peinture à ou au-dessus d'une température gazeuse d'un composant polymère de la feuille de peinture ;
(iv) placage de la feuille de peinture sur la surface de la poignée de porte extérieure (100) ;
(v) pressage de la feuille de peinture par une pression de gaz dans le moule à surpression ;
(vi) durcissement thermique du produit adhésif.

10. Procédé selon l'une des revendications précédentes,
**caractérisé en ce**
**que** l'étape (c) présente au moins les étapes suivantes :
(i) un produit de revêtement et de remplissage est appliqué sur la première (150) et la deuxième pièce moulée (151) ;
(ii) le produit de revêtement et de remplissage contient un liant ;
(iii) le liant est durci par un rayonnement à haute énergie, en particulier par rayonnement UV ;
(iv) et un revêtement de finition est appliqué ensuite.

11. Procédé selon la revendication 10,
**caractérisé en ce**
**que** le revêtement de finition est formé d'une couche de peinture de base apportant une couleur et/ou un effet et d'une couche de vernis transparent ou d'une peinture de finition monocouche pigmentée.

12. Procédé selon l'une des revendications précédentes,
**caractérisé en ce**
**que** l'étape (e) présente au moins les étapes suivantes :
(i) l'unité électronique est appliquée sur un élément porteur et disposée au moyen de l'élément porteur sur une pièce moulée (150, 151) ;
(ii) un organe de couplage relie l'élément porteur à la pièce moulée (150, 151) par complémentarité de formes et/ou conjugaison de forces.

13. Procédé selon l'une des revendications précédentes,
**caractérisé en ce**
**que** l'unité électronique est scellée avant l'incorporation selon l'étape (e) de manière étanche au milieu avec une masse de scellement.

14. Procédé selon l'une des revendications 1 à 12,
**caractérisé en ce**
**qu'**après l'assemblage desdites au moins deux pièces moulées (150, 151) selon l'étape (f), l'unité électronique est scellée avec la masse de scellement, en particulier que la masse de scellement remplit complètement une partie intérieure de la poignée de porte extérieure (100).
